# EUROPEAN PATENT APPLICATION

(11) **EP 2 223 894 A1**
(43) Date of publication of application: **01.09.2010**
(21) Application number: 10154204.1
(22) Date of filing: 22.02.2010
(51) Int. Cl.: C01B 39/48

(54) **Synthesis of molecular sieve ssz-74 using a hydroxide-mediated gel**

(30) Priority: 27.02.2009 US 395453
(71) Applicant: Chevron U.S.A. Inc., San Ramon, CA 94583 (US)
(72) Inventor: Burton, Allen, Richmond, CA 94804 (US); Zones, Stacey, San Fransisco, CA 94122 (US)
(74) Representative: Nash, David Allan

(57) **Abstract**

The present invention is directed to a novel method for synthesizing crystalline molecular sieve SSZ-74 using a hydroxide-mediated gel and 1,6-bis(N-methylpyrrolidinium)hexane dication as structure directing agent.

## Description

### FIELD OF THE INVENTION

The present invention is directed to a novel method for synthesizing crystalline molecular sieve SSZ-74 in a hydroxide media using a 1,6-bis(N-methylpyrrolidinium)hexane dication as a structure directing agent ("SDA").

### BACKGROUND OF THE INVENTION

Because of their unique sieving characteristics, as well as their catalytic properties, crystalline molecular sieves and zeolites are especially useful in applications such as hydrocarbon conversion, gas drying and separation. Although many different crystalline molecular sieves have been disclosed, there is a continuing need for new molecular sieves with desirable properties for gas separation and drying, hydrocarbon and chemical conversions, and other applications. New molecular sieves may contain novel internal pore architectures, providing enhanced selectivities in these processes.

Recently, Zones et al. reported the discovery of a novel molecular sieve designated as "molecular sieve SSZ-74" or "SSZ-74." (See, U.S. Patent No. 7,348,295 to Zones et al.). Zones et al. reported preparation of SSZ-74 using a fluoride-mediated gel, namely, by contacting (1) an source(s) of silicon oxide, and, optionally, (2) an source(s) of aluminum oxide, gallium oxide, iron oxide, boron oxide, titanium oxide, indium oxide and mixtures thereof, with a hexamethylene-1,6-bis(N-methyl-N-pyrrolidinium) dication SDA in the presence of fluoride ions.

It has now been found that SSZ-74 can be synthesized in a hydroxide media using a 1,6-bis(N-methylpyrrolidinium)hexane dication as a SDA.

### SUMMARY OF THE INVENTION

The present invention is directed to a method of making a family of crystalline molecular sieves referred to herein as "molecular sieve SSZ-74" or simply "SSZ-74."

In accordance with the present invention there is provided a molecular sieve made by the method of the present invention and having a mole ratio greater than about 40 of (1) at least one oxide of at least one tetravalent element to (2) optionally, one or more oxides selected from the group consisting of oxides of trivalent elements, pentavalent elements, and mixtures thereof, and having, after calcination, the X-ray diffraction lines of Table 6. It should be noted that the phrase "mole ratio greater than about 40" includes the case where there is no oxide (2), i.e., the mole ratio of oxide (1) to oxide (2) is infinity. In that case the molecular sieve is comprised of essentially all of the oxide of one or more tetravalent elements.

The method of the present invention includes preparing a crystalline material by contacting under crystallization conditions and substantially in the absence of fluoride ions: (1) at least one source of at least one oxide of a tetravalent element; (2) optionally, one or more sources of one or more oxides selected from the group consisting of oxides of trivalent elements, pentavalent elements, and mixtures thereof; (3) hydroxide ions; and (4) a SDA selected from the group consisting a 1,6-bis(N-methylpyrrolidinium)hexane dication, wherein the reaction mixture is substantially free of fluoride ions.

The present invention also includes a process for preparing a crystalline material having, after calcination, the X-ray diffraction lines of Table 6, by:
(a) preparing a substantially fluoride-free reaction mixture containing: (1) at least one source of at least one oxide of a tetravalent element; (2) optionally, one or more sources of one or more oxides selected from the group consisting of oxides of trivalent elements, pentavalent elements, and mixtures thereof; (3) optionally, at least one source of an element selected from Groups 1 and 2 of the Periodic Table; (4) hydroxide ions; (5) a 1,6-bis(N-methylpyrrolidinium)hexane dication; and (6) water; and
(b) maintaining the reaction mixture under conditions sufficient to form crystals of the molecular sieve.

Where the molecular sieve formed is an intermediate material, the process of the present invention includes a further post-synthesis processing in order to achieve the target molecular sieve (e.g. by post-synthesis heteroatom lattice substitution or acid leaching).

The present invention also provides SSZ-74 made by the method of the present invention and having a composition, as-synthesized and in the anhydrous state, in terms of mole ratios, as follows:

| | Broadest | Preferred |
|---|---|---|
| TO₂ / X₂O_{b} | 40 - ∞ | 60 - ∞ |
| Q / TO₂ | 0.02 - 0.06 | 0.03 - 0.06 |
| M / TO₂ | 0 - 0.10 | 0 - 0.03 |

wherein:
   (1) T is selected from the group consisting of tetravalent elements from Groups 4 - 14 of the Periodic Table, and mixtures thereof;
   (2) X is selected from the group consisting of trivalent and pentavalent elements from Groups 3 - 13 of the Periodic Table, and mixtures thereof;
   (3) stoichiometric variable b equals the valence state of compositional variable X (e.g. when X is trivalent, b = 3; when X is pentavalent, b = 5);
   (4) M is selected from the group consisting of elements from Groups 1 and 2 of the Periodic Table; and
   (5) Q is a SDA selected from the group consisting of 1,6-bis(N-methylpyrrolidinium)hexane dications.

### BRIEF DESCRIPTION OF THE DRAWINGS

Figure 1 shows the results of powder X-ray diffraction (XRD) analysis of the molecular sieve prepared in a fluoride media in Comparative Example 1.
Figure 2 shows the results of a scanning electron microscopy (SEM) analysis of the molecular sieve prepared in Comparative Example 1.
Figure 3 also shows the results of SEM analysis of the molecular sieve prepared in Comparative Example 1.
Figure 4 shows the results of powder XRD analysis of the molecular sieve prepared in a hydroxide media in Example 1.
Figure 5 shows the results of powder XRD analysis of the molecular sieve prepared in a hydroxide media in Example 2.
Figure 6 shows the results of SEM analysis of the molecular sieve prepared in Example 2.
Figure 7 also shows the results of SEM analysis of the molecular sieve prepared in Example 2.
Figure 8 shows the results of powder XRD analysis of the molecular sieve prepared in Example 4.
Figure 9 shows the results of powder XRD analysis of the molecular sieve prepared in a a hydroxide media in Example 5.
Figure 10 shows the results of SEM analysis of the molecular sieve prepared in Example 5.
Figure 11 also shows the results of SEM analysis of the molecular sieve prepared in Example 5.
Figure 12 shows the results of powder XRD analysis of the molecular sieve prepared in a hydroxide media in Example 6.
Figure 13 shows the results of SEM analysis of the molecular sieve prepared in Example 6.
Figure 14 also shows the results of SEM analysis of the molecular sieve prepared in Example 6.
Figure 15 shows the results of powder XRD analysis of the molecular sieve prepared in a hydroxide media in Example 7.
Figure 16 shows the results of powder XRD analyses of the calcined molecular sieves prepared in Examples 6 and 11.
Figure 17 shows the results of powder XRD analysis of the molecular sieve prepared in a hydroxide media in Example 14.
   Figure 18 shows the results of powder XRD analysis of the molecular sieve prepared in a hydroxide media in Example 17.

### DETAILED DESCRIPTION OF THE INVENTION

### Introduction

The term "Periodic Table" refers to the version of IUPAC Periodic Table of the Elements dated June 22, 2007, and the numbering scheme for the Periodic Table Groups is as described in Chemical and Engineering News, 63(5), 27 (1985).

The term "molecular sieve" includes (a) intermediate and (b) final or target molecular sieves and zeolites produced by (1) direct synthesis or (2) post-crystallization treatment (secondary synthesis). Secondary synthesis techniques allow for the synthesis of a target molecular sieve from an intermediate molecular sieve by heteroatom lattice substitution or other techniques. For example, an aluminosilicate can be synthesized from an intermediate borosilicate by post-crystallization heteroatom lattice substitution of the Al for B. Such techniques are known, for example as described in U.S. Patent No. 6,790,433 to C.Y. Chen and Stacey Zones, issued September 14, 2004.

Where permitted, all publications, patents and patent applications cited in this application are herein incorporated by reference in their entirety, to the extent such disclosure is not inconsistent with the present invention.

Unless otherwise specified, the recitation of a genus of elements, materials or other components, from which an individual component or mixture of components can be selected, is intended to include all possible sub-generic combinations of the listed components and mixtures thereof. Also, "include" and its variants, are intended to be non-limiting, such that recitation of items in a list is not to the exclusion of other like items that may also be useful in the materials, compositions and methods of this invention.

The present invention is directed to a method for making molecular sieve designated herein as "molecular sieve SSZ-74" or simply "SSZ-74."

In preparing SSZ-74, a 1,6-bis(N-methylpyrrolidinium)hexane dication is used as a structure directing agent ("SDA"), also known as a crystallization template. The SDA useful for making SSZ-74 is represented by the following structure (1):

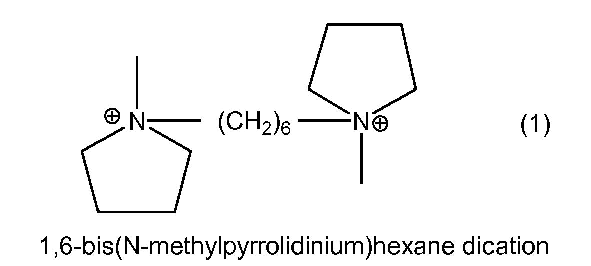

The SDA dication is associated with anions (X⁻) which may be any anion that is not detrimental to the formation of SSZ-74. Representative anions include elements from Group 18 of the Periodic Table (e.g., fluoride, chloride, bromide and iodide), hydroxide, acetate, sulfate, tetrafluoroborate, carboxylate, and the like.

The 1,6-bis(N-methylpyrrolidinium)hexane SDA of the present invention (represented by structure (1) herein) can be synthesized by reacting a dihalidealkane (such as 1,6-dibromobutane) with N-methyl pyrrolidine.

The SDA cations are associated with anions which may be any anion that is not detrimental to the formation of the molecular sieve. Representative anions include elements selected from Group 17 of the Periodic Table, hydroxide, acetate, sulfate, tetrafluoroborate, and carboxylate. Hydroxide is the most preferred anion. The SDA may be used to provide hydroxide ions to the reaction mixture. Thus, it is beneficial to ion-exchange, for example, a halide to hydroxide counter-ion.

### Reaction Mixture

In general, SSZ-74 is prepared by:
(a) preparing a substantially fluoride-free reaction mixture containing (1) at least one source of an oxide of at least one tetravalent element; (2) optionally, one or more sources of one or more oxides selected from the group consisting of oxides of trivalent elements, pentavalent elements, and mixtures thereof; (3) optionally at least one source of an element selected from Groups 1 and 2 of the Periodic Table; (4) hydroxide ions; (5) a 1,6-bis(N-methylpyrrolidinium)hexane dication; and (6) water; and
(b) maintaining the reaction mixture under conditions sufficient to form crystals of the molecular sieve.

Where the molecular sieve formed is an intermediate material, the process of the present invention includes a further step of synthesizing a target molecular sieve by post-synthesis techniques, such as heteroatom lattice substitution techniques and acid leaching.

The composition of the substantially fluoride-free reaction mixture from which the molecular sieve is formed, in terms of molar ratios, is identified in Table 1 below:

**TABLE 1**

| Reactants | Broad | Preferred |
|---|---|---|
| TO₂ / X₂Oₐ molar ratio | 40 - ∞ | 60 - ∞ |
| M / TO₂ molar ratio | 0 - 0.5 | 0 - 0.20 |
| Q / TO₂ molar ratio | 0.02 - 0.5 | 0.10 - 0.25 |
| OH⁻ / TO₂ molar ratio | 0.10 - 0.50 | 0.20 - 0.40 |
| H₂O / TO₂ molar ratio | 1-40 | 2 - 30 |

wherein:
(a) wherein compositional variables T, X, Q and M are as described herein above; and
(b) stoichiometric variable a equals the valence state of compositional variable X (e.g. when X is trivalent, a = 3; when X is pentavalent, a = 5).

In one subembodiment, the composition of the substantially fluoride-free reaction mixture from which the molecular sieve is formed, in terms of molar ratios, is identified in Table 2 below, wherein Q is as described herein above.

**TABLE 2**

| Reactants | Broad | Preferred |
|---|---|---|
| SiO₂ / GeO₂ | 8 - ∞ | 11 - ∞ |
| Q / (SiO₂ + GeO₂) | 0.05 - 0.5 | 0.1 - 0.25 |
| OH⁻ / (SiO₂ + GeO₂) | 0.1 - 1.0 | 0.2 - 0.5 |
| H₂O / (SiO₂ + GeO₂) | 1 - 30 | 2 - 15 |

In another subembodiment, the composition of the substantially fluoride-free reaction mixture from which the molecular sieve is formed, in terms of molar ratios, is identified in Table 3 below, wherein Q is as described herein above.

**TABLE 3**

| Reactants | Broad | Preferred |
|---|---|---|
| Q / SiO₂ | 0.05 - 0.5 | 0.1 - 0.25 |
| OH⁻ / SiO₂ | 0.1 - 1.0 | 0.2 - 0.5 |
| H₂O / SiO₂ | 1 - 30 | 2 - 15 |

For each embodiment described herein, the reaction mixture is substantially free of fluoride ions. The terms "substantially free of fluoride ions," "substantially fluoride-free" and "substantially in the absence of fluoride ions," as used herein, are synonymous and mean fluoride ions are completely absent from the reaction mixture or are present in quantities that have less than a measureable effect on, or confer less than a material advantage to, the synthesis of the molecular sieves described herein (e.g. F⁻ is present as an impurity of one or more of the reactants). A reaction mixture substantially free of fluoride ions will typically contain, for example, a F/TO₂ molar ratio of between 0 and less than 0.20 (0≤ F/TO₂< 0.20). In one subembodiment, 0≤ F/TO₂≤ 0.15.

As noted above, for each embodiment described herein, T is selected from the group consisting of elements from Groups 4 - 14 of the Periodic Table. In one subembodiment, T is selected from the group consisting of germanium (Ge), silicon (Si), titanium (Ti), and mixtures thereof. In another subembodiment, T is selected from the group consisting of germanium (Ge), silicon (Si), and mixtures thereof. In one subembodiment, T is Si. Sources of elements selected for composition variable T include oxides, hydroxides, acetates, oxalates, ammonium salts and sulfates of the element(s) selected for T and X. In one subembodiment, each source(s) of the element(s) selected for composition variable T is an oxide. Where T is Si, sources useful herein for Si include fumed silica, precipitated silicates, silica hydrogel, silicic acid, colloidal silica, tetra-alkyl orthosilicates (e.g. tetraethyl orthosilicate), and silica hydroxides. Sources useful herein for Ge include germanium oxide and germanium ethoxide.

For each embodiment described herein, X is selected from the group consisting of elements from Groups 3 - 13 of the Periodic Table. In one subembodiment, X is selected from the group consisting of gallium (Ga), aluminum (AI), iron (Fe), boron (B), indium (In), and mixtures thereof. In another subembodiment, X is selected from the group consisting of AI, B, Fe, Ga, and mixtures thereof. Sources of elements selected for optional composition variable X include oxides, hydroxides, acetates, oxalates, ammonium salts and sulfates of the element(s) selected for X. Typical sources of aluminum oxide include aluminates, alumina, and aluminum compounds such as AlCl₃, Al₂(SO₄)₃, aluminum hydroxide (Al(OH₃)), kaolin clays, and other zeolites. An example of the source of aluminum oxide is LZ-21 0 zeolite (a type of Y zeolite). Boron, gallium, and iron can be added in forms corresponding to their aluminum and silicon counterparts.

As described herein above, for each embodiment described herein, the reaction mixture may be formed using at least one source of an element selected from Groups 1 and 2 of the Periodic Table (referred to herein as M). In one subembodiment, the reaction mixture is formed using an source of an element from Group 1 of the Periodic Table. In another subembodiment, the reaction mixture is formed using an source of sodium (Na). Any M-containing compound which is not detrimental to the crystallization process is suitable. Sources for such Groups 1 and 2 elements include oxides, hydroxides, nitrates, sulfates, halogenides, oxalates, citrates and acetates thereof.

For each embodiment described herein, the molecular sieve reaction mixture can be supplied by more than one source. Also, two or more reaction components can be provided by one source.

The reaction mixture can be prepared either batch wise or continuously. Crystal size, morphology and crystallization time of the molecular sieve described herein may vary with the nature of the reaction mixture and the synthesis conditions.

### Crystallization and Post-Synthesis Treatment

In practice, the molecular sieve is prepared by:
(a) preparing a substantially fluoride-free reaction mixture as described herein above; and
(b) maintaining the reaction mixture under crystallization conditions sufficient to form the molecular sieve.

The reaction mixture is maintained at an elevated temperature until the molecular sieve is formed. The hydrothermal crystallization is usually conducted under pressure, and usually in an autoclave so that the reaction mixture is subject to autogenous pressure, at a temperature between 125°C and 200°C.

The reaction mixture may be subjected to mild stirring or agitation during the crystallization step. It will be understood by a person skilled in the art that the molecular sieves described herein may contain impurities, such as amorphous materials, unit cells having framework topologies which do not coincide with the molecular sieve, and/or other impurities (e.g., organic hydrocarbons).

During the hydrothermal crystallization step, the molecular sieve crystals can be allowed to nucleate spontaneously from the reaction mixture. The use of crystals of the molecular sieve as seed material can be advantageous in decreasing the time necessary for complete crystallization to occur. In addition, seeding can lead to an increased purity of the product obtained by promoting the nucleation and/or formation of the molecular sieve over any undesired phases. When used as seeds, seed crystals are added in an amount between 1% and 10% of the weight of the source for compositional variable T used in the reaction mixture.

Once the molecular sieve has formed, the solid product is separated from the reaction mixture by standard mechanical separation techniques such as filtration. The crystals are water-washed and then dried to obtain the as-synthesized molecular sieve crystals. The drying step can be performed at atmospheric pressure or under vacuum.

The molecular sieve can be used as-synthesized, but typically will be thermally treated (calcined). The term "as-synthesized" refers to the molecular sieve in its form after crystallization, prior to removal of the SDA cation. The SDA can be removed by thermal treatment (e.g., calcination), preferably in an oxidative atmosphere (e.g., air, gas with an oxygen partial pressure of greater than 0 kPa) at a temperature readily determinable by one skilled in the art sufficient to remove the SDA from the molecular sieve. The SDA can also be removed by photolysis techniques (e.g. exposing the SDA-containing molecular sieve product to light or electromagnetic radiation that has a wavelength shorter than visible light under conditions sufficient to selectively remove the organic compound from the molecular sieve) as described in U.S. Patent No. 6,960,327 to Navrotsky and Parikh, issued November 1, 2005.

The molecular sieve can subsequently be calcined in steam, air or inert gas at temperatures ranging from about 200°C to about 800°C for periods of time ranging from 1 to 48 hours, or more. Usually, it is desirable to remove the extra-framework cation (e.g. Na⁺) by ion-exchange or other known method and replace it with hydrogen, ammonium, or any desired metal-ion.

Where the molecular sieve formed is an intermediate material, the target molecular sieve can be achieved using post-synthesis techniques such as heteroatom lattice substitution techniques. The target molecular sieve can also be achieved by removing heteroatoms from the lattice by known techniques such as acid leaching.

The molecular sieve made from the process of the present invention can be formed into a wide variety of physical shapes. Generally speaking, the molecular sieve can be in the form of a powder, a granule, or a molded product, such as extrudate having a particle size sufficient to pass through a 2-mesh (Tyler) screen and be retained on a 400-mesh (Tyler) screen. In cases where the catalyst is molded, such as by extrusion with an organic binder, the molecular sieve can be extruded before drying, or, dried or partially dried and then extruded.

The molecular sieve can be composited with other materials resistant to the temperatures and other conditions employed in organic conversion processes. Such matrix materials include active and inactive materials and synthetic or naturally occurring molecular sieves as well as inorganic materials such as clays, silica and metal oxides. Examples of such materials and the manner in which they can be used are disclosed in U.S. Patent No. 4,910,006, issued May 20, 1990 to Zones et al., and U.S. Patent No. 5,316,753, issued May 31, 1994 to Nakagawa.

SSZ-74 is useful as an adsorbent for gas separations (owing to its high pore volume while maintaining diffusion control and hydrophobicity). SSZ-74 can also be used in a catalyst for converting oxygenates (such as methanol) to olefins, and for making small amines. SSZ-74 can be used to reduce oxides of nitrogen in gas streams (such as automotive exhaust). SSZ-74 can also be used as a cold start hydrocarbon trap in combustion engine pollution control systems. SSZ-74 is particularly useful for trapping C₃ fragments. SSZ-74 can also be used in catalysts for hydrocarbon conversion reactions, and in Beckmann Rearrangement.

### Characterization of the Molecular Sieve

Molecular sieves made by the process of the present invention have a composition, as-synthesized and in the anhydrous state, as described in Table 4 (in terms of mole ratios), wherein compositional variables T, X, Q and M and stoichiometric variable b are as described herein above:

**TABLE 4**

| | Broadest | Preferred |
|---|---|---|
| TO₂/X₂O_{b} | 40 - ∞ | 60 - ∞ |
| Q/TO₂ | 0.02 - 0.06 | 0.03 - 0.06 |
| M/TO₂ | 0 - 0.10 | 0 - 0.03 |

Molecular sieves synthesized by the process of the present invention are characterized by their XRD pattern. The powder XRD pattern lines of Table 5 are representative of as-synthesized SSZ-74 made in accordance with this invention. Minor variations in the diffraction pattern can result from variations in the mole ratios of the framework species of the particular sample due to changes in lattice constants. In addition, sufficiently small crystals will affect the shape and intensity of peaks, leading to significant peak broadening. Minor variations in the diffraction pattern can also result from variations in the organic compound used in the preparation and from variations in the T/X mole ratio from sample to sample. Calcination can also cause minor shifts in the XRD pattern. Notwithstanding these minor perturbations, the basic crystal lattice structure remains unchanged.

**TABLE 5**

| Characteristic Peaks for As-Synthesized SSZ-74 | | |
|---|---|---|
| 2 Theta^{(a)} | d-spacing (Angstroms) | Relative Absolute Intensity (%)^{(b)} |
| 7.91 | 11.17 | W |
| 8.60 | 10.27 | M |
| 8.81 | 10.04 | M |
| 8.99 | 9.83 | W |
| 22.65 | 3.92 | S |
| 23.03 | 3.86 | VS |
| 23.91 | 3.72 | S |
| 24.54 | 3.62 | M |
| 24.90 | 3.57 | W |
| 29.87 | 2.99 | W |

| | | |
|---|---|---|
| ^{(a)} ±0.20 ^{(b)} The X-ray patterns provided are based on a relative intensity scale in which the strongest line in the X-ray pattern is assigned a value of 100: W(weak) is less than 20; M(medium) is between 20 and 40; S(strong) is between 40 and 60; VS(very strong) is greater than 60. | | |

The X-ray diffraction pattern lines of Table 6 are representative of calcined SSZ-74 made in accordance with this invention.

**TABLE 6**

| Characteristic Peaks for Calcined SSZ-74 | | |
|---|---|---|
| 2 Theta^{(a)} | d-spacing (Angstroms) | Relative Absolute Intensity (%)^{(b)} |
| 8.02 | 11.02 | VS |
| 8.85 | 9.99 | VS |
| 9.12 | 9.69 | VS |
| 14.05 | 6.30 | W |
| 15.17 | 5.83 | W |
| 16.16 | 5.48 | W |
| 23.32 | 3.81 | M |
| 23.70 | 3.75 | S |
| 24.30 | 3.66 | M |

| | | |
|---|---|---|
| ^{(a)} ± 0.25 ^{(b)} The X-ray patterns provided are based on a relative intensity scale in which the strongest line in the X-ray pattern is assigned a value of 100: W(weak) is less than 20; M(medium) is between 20 and 40; S(strong) is between 40 and 60; VS(very strong) is greater than 60. | | |

The powder X-ray diffraction patterns presented herein were determined by standard techniques. The radiation was CuK-α radiation. The peak heights and the positions, as a function of 2θ where θ is the Bragg angle, were read from the relative intensities of the peaks (adjusting for background), and d, the interplanar spacing in Angstroms corresponding to the recorded lines, can be calculated.

### EXAMPLES

The following examples demonstrate but do not limit the present invention.

### Synthesis of 1,6-bis(N-methylpyrrolidinium)hexane Dication

In 50 mL of acetone was dissolved 5mL (48 mmoles) of N-methyl pyrrolidine. 4.9 grams (g) of 1,6 dibromohexane (20 mmoles) were added and the resulting mixture was stirred at room temperature for three days. Solids formed and were collected by filtration and washed with ether and kept in a vacuum oven. Then 3.71 g of the dried solid was mixed into 18.7 g of water and 9.57 g of AG1-X8 resin (Bio-Rad Laboratories) for exchange to the OH form. The exchange was run overnight and then the solution was collected and titrated.

### COMPARATIVE EXAMPLE 1

### Synthesis of SSZ-74 in a Fluoride-Mediated Gel

69.38 g of a hydroxide solution of 1,6-bis(N-methylpyrrolidinium)hexane ([OH⁻] = 0.48 mmol/g) synthesized per Example 1, 4.0 g CAB-O-SIL M-5 fumed silica (Cabot Corporation) and 0.28 g LZ-210 (Union Carbide) as an aluminum source were mixed together in a Teflon liner. 1.30 g of a 50% HF solution was then added to the gel and mixed to create a uniform suspension. The gel was then placed in an oven at 95°C in order to allow the water to evaporate until the molar H₂O/SiO₂ ratio was below 5.0. The H₂O/SiO₂ ratio was then adjusted to 5.0 with the addition of the necessary quantity of water. The Teflon liner was then capped and sealed within a 125 mL steel PARR autoclave. The autoclave was heated in an oven at 150°C for 6 days. The autoclave was then removed and allowed to cool to room temperature. The gel was then recovered by filtration and washed thoroughly with deionized water (> 1 liter). The recovered solids were then allowed to dry in an oven at 95°C overnight.

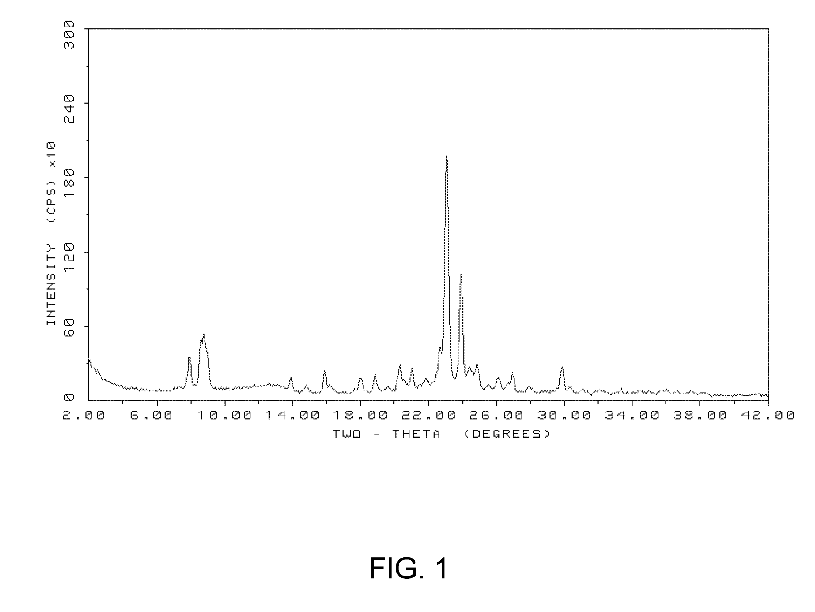

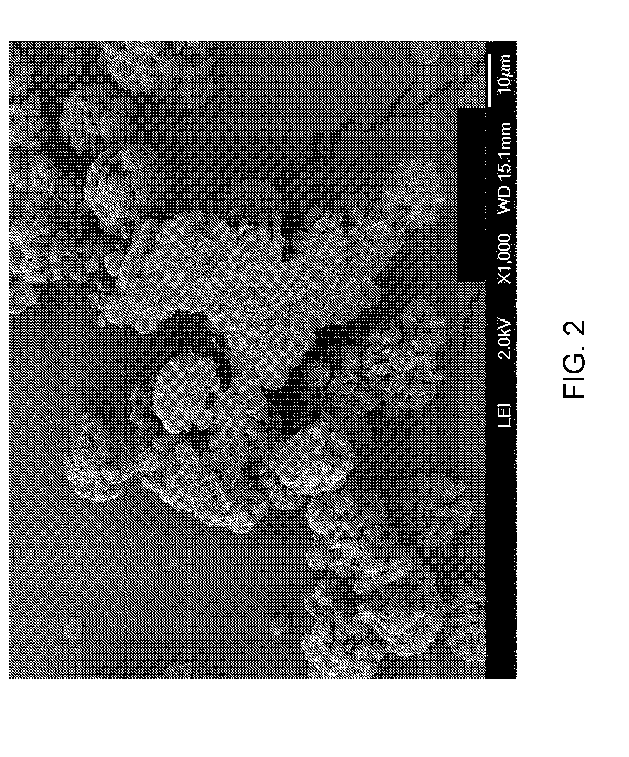

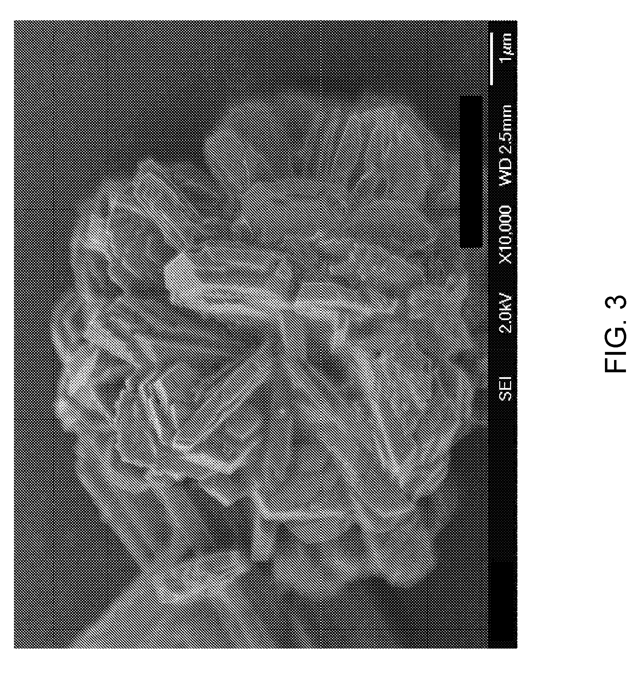

The resulting product was analyzed by powder X-ray diffraction (XRD). The resulting pattern is shown in Figure 1. The pattern indicates that the product was SSZ-74, in agreement with the results indicated in U.S. Patent No. 7,348,295 to Zones et al., which issued March 25, 2008. The resulting product was also analyzed by scanning electron microscopy (SEM). The resulting SEM images are shown in Figures 2 and 3, and show the morphologies to be composed of large polycrystalline aggregates that are about 10 microns in size.

### COMPARATIVE EXAMPLE 2

6.25 g of a hydroxide solution of 1,6-bis(N-methylpyrrolidinium)hexane ([OH⁻] = 0.48 mmol/g) were thoroughly mixed with 0.06 g NaOH and 0.09 g F-2000 aluminum hydroxide (Reheis, Inc.) in a tared Teflon container. 0.90 g CAB-O-SIL M-5 fumed silica (Cabot Corporation) was then mixed with the solution to create a uniform gel. The gel was then placed in an oven at 95°C in order to allow the water to evaporate until the molar H₂O/SiO₂ ratio was below 5.0. The H₂O/SiO₂ ratio was then adjusted to 5.0 with the addition of the necessary quantity of water. The autoclave was heated in an oven at 150°C for 10 days. The autoclave was then removed and allowed to cool to room temperature, and the solids were recovered by

vacuum filtration and washed copiously with water. The recovered solids were then allowed to dry in an oven at 95°C overnight.

The resulting product was analyzed by powder XRD. The pattern indicates that the product was zeolite beta.

### EXAMPLE 1

6.25 g of a hydroxide solution of 1,6-bis(N-methylpyrrolidinium)hexane ([OH⁻] = 0.48 mmol/g) were thoroughly mixed with 0.06 g NaOH and 0.045 g F-2000 aluminum hydroxide (Reheis, Inc.) in a tared Teflon container. 0.90 g CAB-O-SIL M-5 fumed silica (Cabot Corporation) was then mixed with the solution to create a uniform gel. 0.05 g of seeds from Comparative Example 1 were then mixed into the gel. The gel was then placed in an oven at 95°C in order to allow the water to evaporate until the molar H₂O/SiO₂ ratio was below 5.0. The H₂O/SiO₂ ratio was then adjusted to 5.0 with the addition of the necessary quantity of water. The autoclave was heated under static conditions in an oven at 150°C for 6 days. The autoclave was then removed and allowed to cool to room temperature. The gel solids were then recovered by centrifugation. The aqueous phase was then decanted, and the solids were then resuspended and centrifuged again. This was repeated until the conductivity was reduced to below 200 µmho/cm. The recovered solids were then allowed to dry in an oven at 95°C overnight.

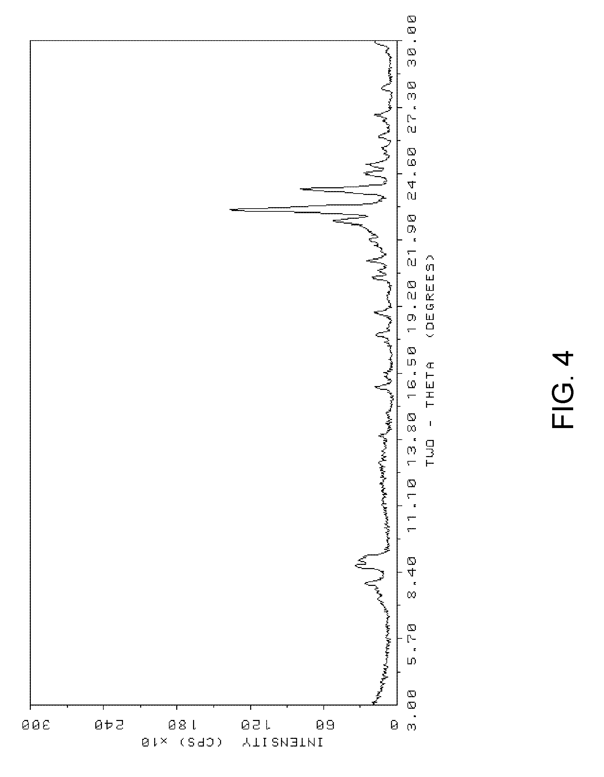

The resulting product was analyzed by powder XRD. The resulting pattern is shown in Figure 4. Powder XRD indicated the sample was SSZ-74 with a minor beta zeolite impurity.

### EXAMPLE 2

6.25 g of a hydroxide solution of 1,6-bis(N-methylpyrrolidinium)hexane ([OH⁻] = 0.48 mmol/g) were thoroughly mixed with 0.06 g NaOH and 0.033 g F-2000 aluminum hydroxide (Reheis, Inc.) in a tared Teflon container. 0.90 g CAB-O-SIL M-5 fumed silica (Cabot Corporation) was then mixed with the solution to create a uniform gel. 0.05 g of seeds from Comparative Example 1 was then mixed into the gel. The gel was then placed in an oven at 95°C in order to allow the water to evaporate until the molar H₂O/SiO₂ ratio was below 7.5. The H₂O/SiO₂ ratio was then adjusted to 7.5 with the addition of the necessary quantity of water. The autoclave was tumbled within a rotating spit (43 revolutions-per-minute or "rpm") in an oven at 150°C for 6 days. The autoclave was then removed and allowed to cool

to room temperature. The gel solids were then recovered by centrifugation. The aqueous phase was then decanted, and the solids were then re-suspended and centrifuged again. This was repeated until the conductivity reduced below 200 µmho/cm. The recovered solids were then allowed to dry in an oven at 95°C overnight.

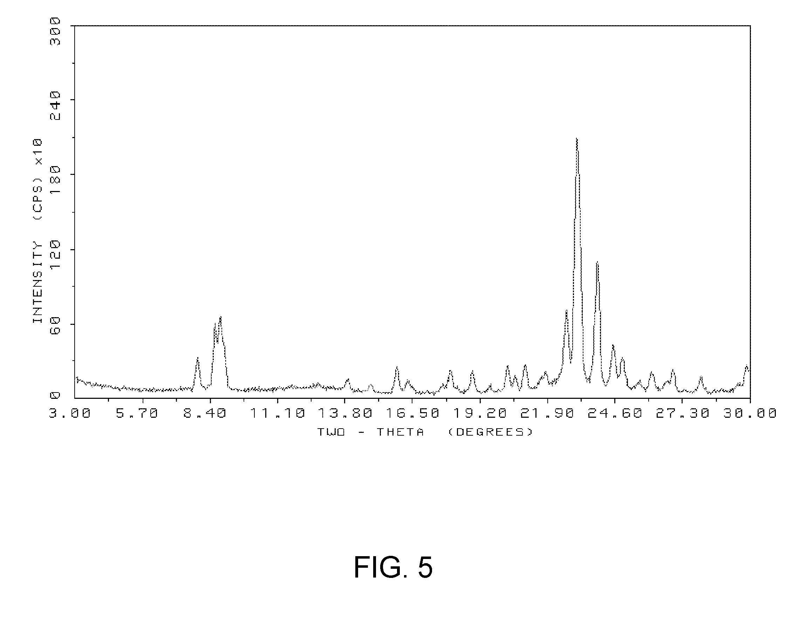

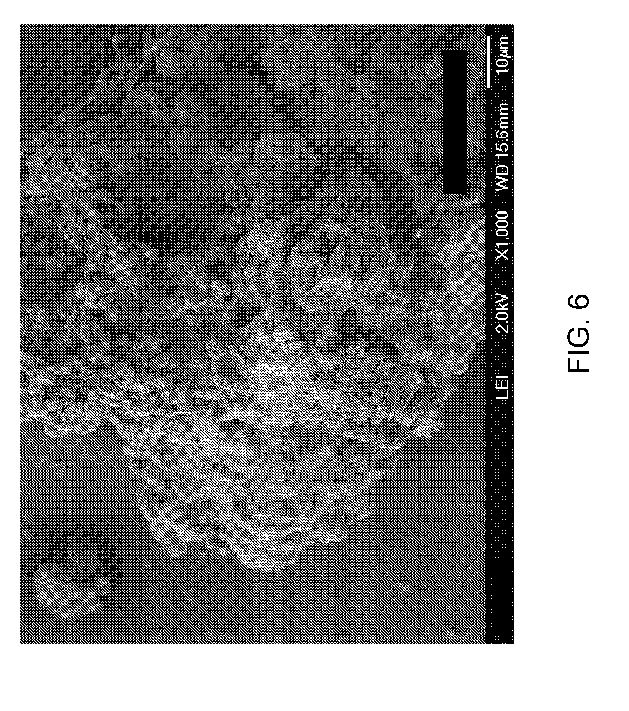

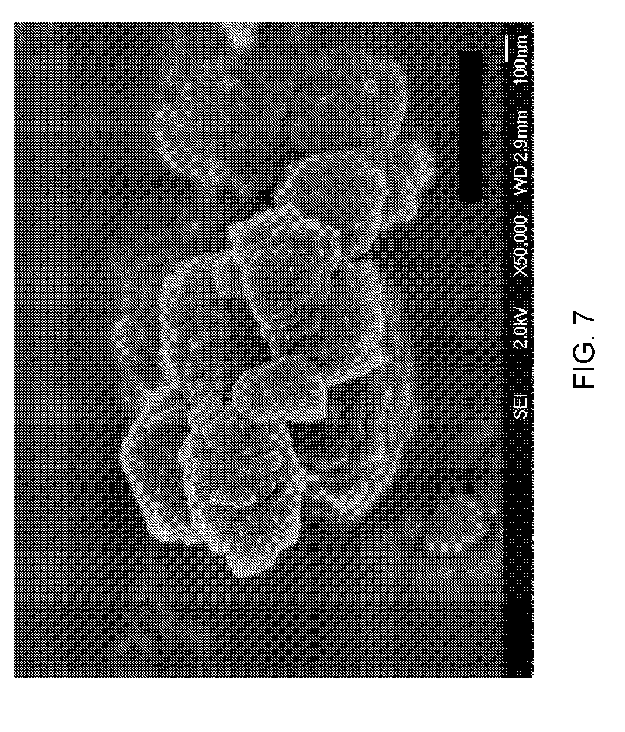

The resulting product was analyzed by powder XRD and SEM. The resulting XRD pattern is shown in Figure 5. Powder XRD indicated the sample was SSZ-74 with a minor beta zeolite impurity. The SEM images are shown in Figures 6 and 7, and indicate that both the individual crystals and the crystal aggregates are smaller than those prepared by the fluoride method.

### EXAMPLE 3

6.25 g of a hydroxide solution of 1,6-bis(N-methylpyrrolidinium)hexane ([OH⁻] = 0.48 mmol/g) were thoroughly mixed with 0.06 g NaOH and 0.033 g F-2000 aluminum hydroxide (Reheis, Inc.) in a tared Teflon container. 0.90 g CAB-O-SIL M-5 fumed silica (Cabot Corporation) was then mixed with the solution to create a uniform gel. 0.05 g of seeds from Comparative Example 1 was then mixed into the gel. The gel was then placed in an oven at 95°C in order to allow the water to evaporate until the molar H₂O/SiO₂ ratio was below 3.5. The H₂O/SiO₂ ratio was then adjusted to 3.5 with the addition of the necessary quantity of water. The autoclave was tumbled within a rotating spit (43 rpm) in an oven at 150°C for 6 days. The autoclave was then removed and allowed to cool to room temperature. The gel solids were then recovered by centrifugation. The aqueous phase was then decanted, and the solids were then resuspended and centrifuged again. This was repeated until the conductivity was reduced to below 200 µmho/cm. The recovered solids were then allowed to dry in an oven at 95°C overnight.

The resulting product was analyzed by powder XRD. Powder XRD pattern indicated the sample was SSZ-74 with minor beta impurity.

### EXAMPLE 4

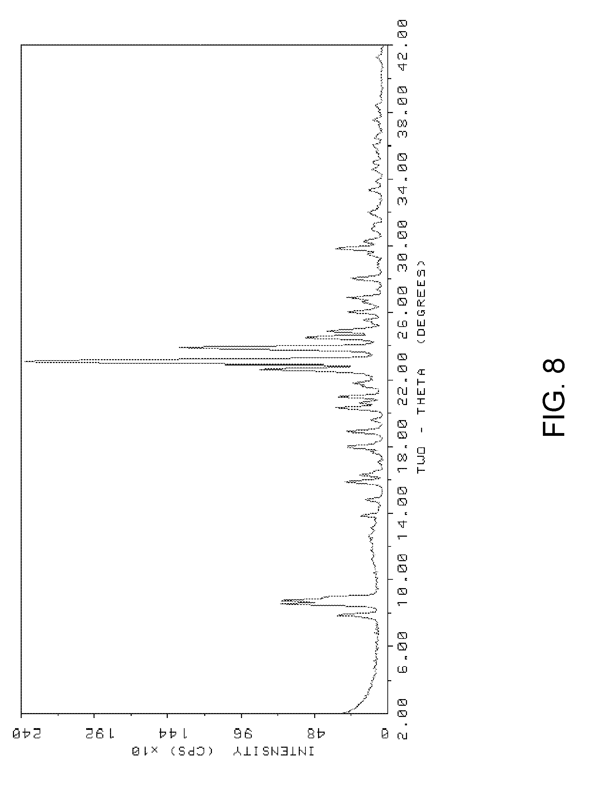

SSZ-74 was-synthesized per the teachings of Example 1 above, without the use of seeds. The resulting product was analyzed by powder XRD. The resulting XRD pattern is shown in Figure 8. Powder XRD indicated the sample was pure SSZ-74.

### EXAMPLE 5

75.0 g of a hydroxide solution of 1,6-bis(N-methylpyrrolidinium)hexane ([OH⁻] = 0.48 mmol/g) were thoroughly mixed with 0.72 g NaOH and 0.40 g F-2000 aluminum hydroxide (Reheis, Inc.) in a tared Teflon container. 10.80 g CAB-O-SIL M-5 fumed silica (Cabot Corporation) was then mixed with the solution to create a uniform gel. 0.60 g of seeds from Comparative Example 1 was then mixed into the gel. The gel was then placed in an oven at 95°C in order to allow the water to evaporate until the molar H₂O/SiO₂ ratio was below 7.5. The H₂O/SiO₂ ratio was then adjusted to 7.5 with the addition of the necessary quantity of water. The autoclave was heated staticly in an oven at 150°C for 4 days. The autoclave was then removed and allowed to cool to room temperature. The gel solids were then recovered by centrifugation. The aqueous phase was then decanted, and the solids were then resuspended and centrifuged again. This was repeated until the conductivity reduced below 200 µmho/cm. The recovered solids were then allowed to dry in an oven at 95°C overnight.

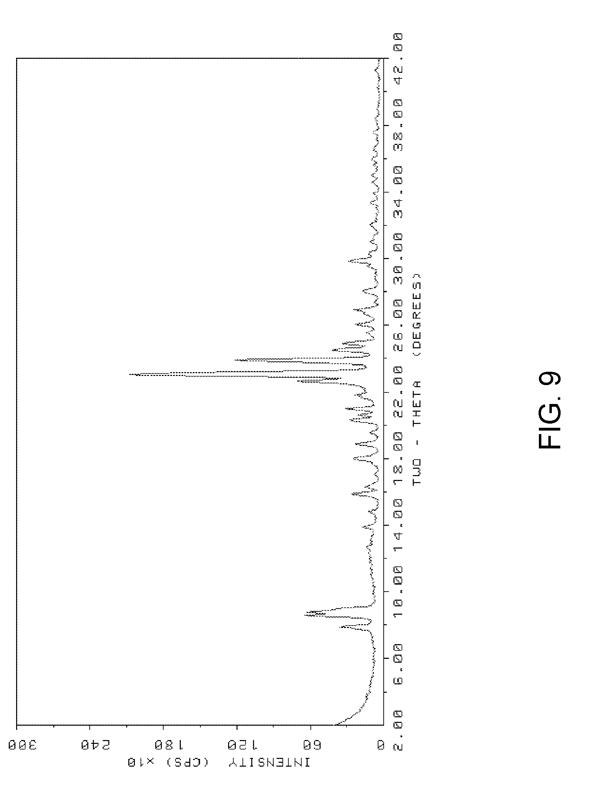

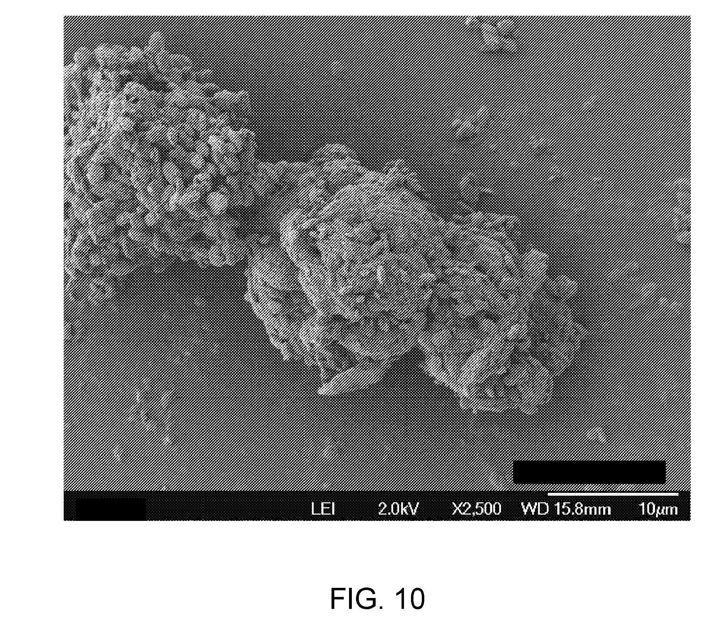

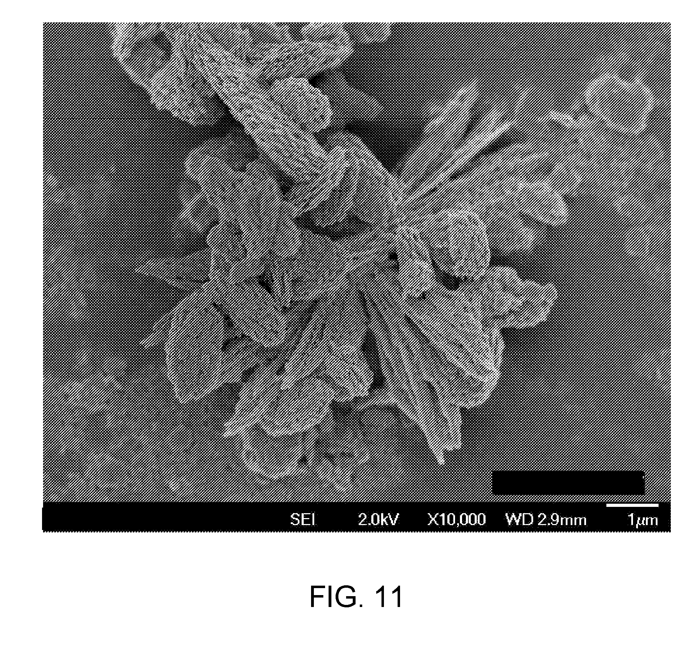

The resulting product was analyzed by powder XRD and SEM. The resulting XRD pattern is shown in Figure 9. Powder XRD indicated the sample was pure SSZ-74. The SEM images are shown in Figures 10 and 11, and indicate the crystals are very small. Table 7 below shows the powder X-ray diffraction lines for the resulting product.

**TABLE 7**

| 2 Theta^{(a)} | d-spacing (Angstroms) | Relative Absolute Intensity (%) |
|---|---|---|
| 7.91 | 11.17 | 17 |
| 8.60 | 10.27 | 35 |
| 8.81 | 10.04 | 35 |
| 8.99 | 9.83 | 16 |
| 12.73 | 6.95 | 2 |
| 13.88 | 6.37 | 6 |
| 14.83 | 5.97 | 5 |
| 15.87 | 5.58 | 16 |
| 16.28 | 5.44 | 8 |
| 16.47 | 5.38 | 2 |
| 17.73 | 5.00 | 4 |
| 18.01 | 4.92 | 13 |
| 18.22 | 4.86 | 3 |
| 18.90 | 4.69 | 13 |
| 19.57 | 4.53 | 4 |
| 20.30 | 4.37 | 15 |
| 20.60 | 4.31 | 8 |
| 21.02 | 4.22 | 14 |
| 21.65 | 4.10 | 5 |
| 21.80 | 4.07 | 10 |
| 22.65 | 3.92 | 41 |
| 23.03 | 3.86 | 100 |
| 23.19 | 3.83 | 78 |
| 23.80 | 3.74 | 38 |
| 23.91 | 3.72 | 59 |
| 24.54 | 3.62 | 25 |
| 24.90 | 3.57 | 18 |
| 25.62 | 3.47 | 5 |
| 26.07 | 3.42 | 12 |
| 26.74 | 3.33 | 6 |
| 26.91 | 3.31 | 13 |
| 28.05 | 3.18 | 9 |
| 28.83 | 3.09 | 2 |
| 29.55 | 3.02 | 5 |
| 29.87 | 2.99 | 17 |
| 30.36 | 2.94 | 5 |

| | | |
|---|---|---|
| ^{(a)} ± 0.20 | | |

### EXAMPLE 6

3.24 g sodium hydroxide and 11.16 g 1,6-bis(N-methylpyrrolidinium)hexane dibromide were dissolved in 36.36 g deionized water. 0.59 g F-2000 aluminum hydroxide (Reheis, Inc.) was then dissolved in the resulting solution. 16.2 g CAB-O-SIL M-5 fumed silica (Cabot Corporation) was then added and mixed to create a uniform gel. 0.82 g SSZ-74 seeds from Example 5 were then mixed into the gel.

The gel was then placed in a Teflon liner, capped, and sealed in an autoclave that was heated staticly in an oven at 150°C for 10 days. The autoclave was then removed and allowed to cool to room temperature. The gel solids were then recovered by filtration and washing with one liter of deionized water. The recovered solids were then allowed to dry in an oven at 95°C overnight.

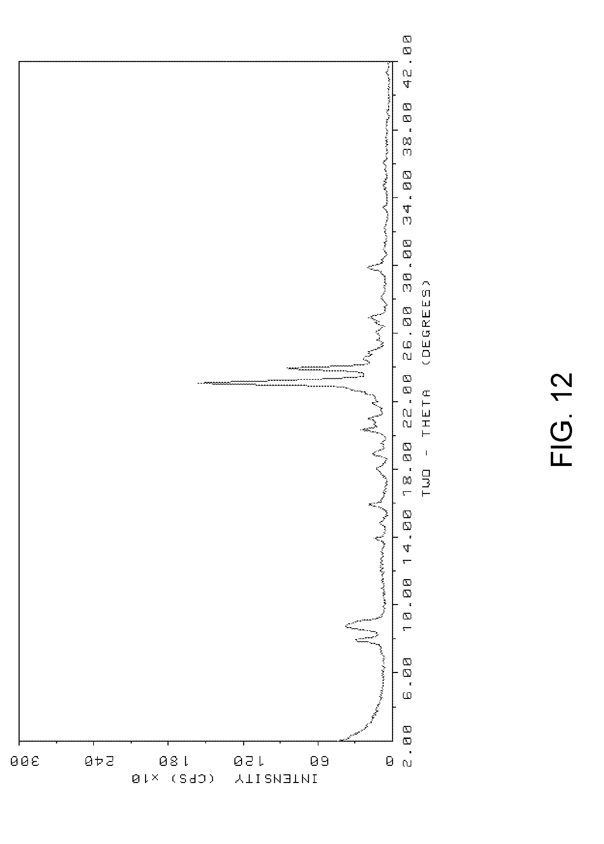

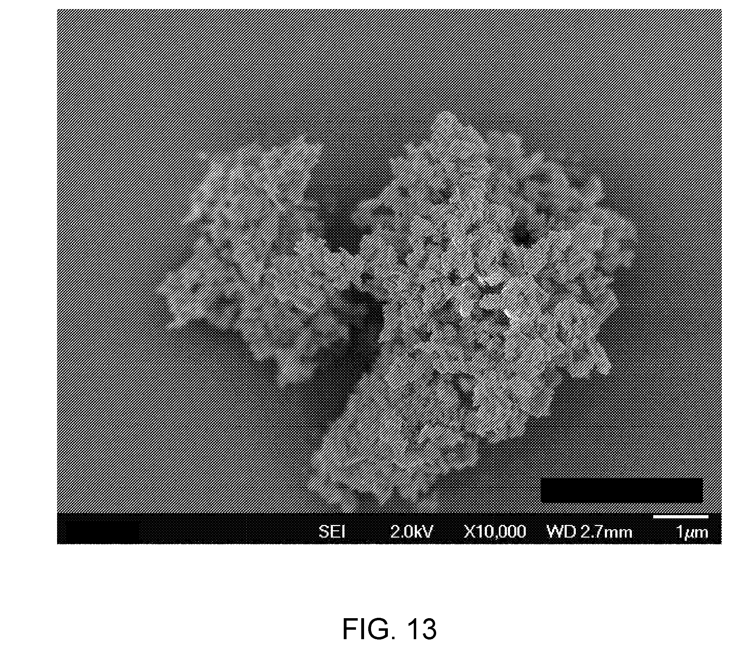

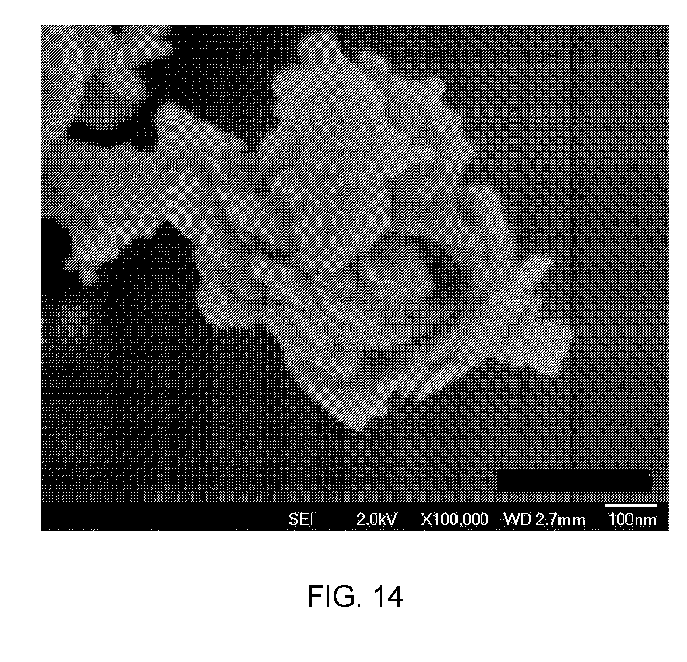

The resulting product was analyzed by powder XRD and SEM. The resulting XRD pattern is shown in Figure 12. Powder XRD indicated the sample was pure SSZ-74. The SEM images are shown in Figures 13 and 14, and indicate the crystals are very small.

The Si/Al ratio of the resulting product was determined by inductively coupled plasma (ICP) spectrometry to be 37.6. The resulting product was analyzed by powder XRD. Table 8 below shows the powder X-ray diffraction lines for the resulting product.

**TABLE 8**

| 2 Theta^{(a)} | d-spacing (Angstroms) | Relative Absolute Intensity (%) |
|---|---|---|
| 7.93 | 11.14 | 14 |
| 8.82 | 10.02 | 21 |
| 13.92 | 6.36 | 5 |
| 14.82 | 5.97 | 3 |
| 15.88 | 5.58 | 10 |
| 18.06 | 4.91 | 4 |
| 18.91 | 4.69 | 6 |
| 20.32 | 4.37 | 12 |
| 20.62 | 4.30 | 5 |
| 21.01 | 4.23 | 7 |
| 21.93 | 4.05 | 3 |
| 22.75 | 3.91 | 15 |
| 23.06 | 3.85 | 100 |
| 23.92 | 3.72 | 54 |
| 24.52 | 3.63 | 8 |
| 24.84 | 3.58 | 6 |
| 25.60 | 3.48 | 3 |
| 25.93 | 3.43 | 3 |
| 26.07 | 3.42 | 4 |
| 26.65 | 3.34 | 4 |
| 26.95 | 3.31 | 9 |
| 28.02 | 3.18 | 3 |
| 29.87 | 2.99 | 11 |

| | | |
|---|---|---|
| ^{(a)} ±0.20 | | |

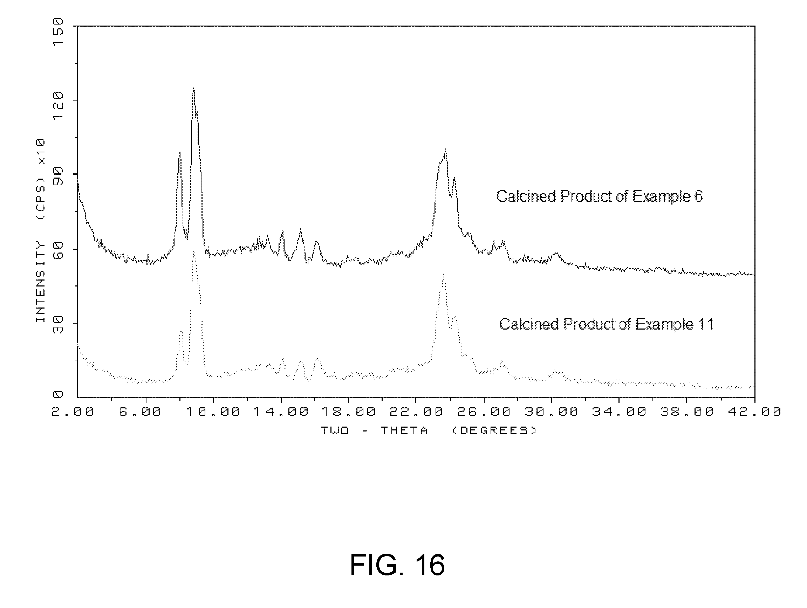

The resulting product was calcined inside a muffle furnace under a flow of 2%oxygen/98%nitrogen heated to 550°C at a rate of 1°C/min and held at 550°C for five hours and then analyzed by powder XRD. The resulting XRD pattern is shown in Figure 16. Table 9 below shows the powder X-ray diffraction lines for the calcined product.

**TABLE 9**

| 2 Theta^{(a)} | d-spacing (Angstroms) | Relative Absolute Intensity (%) |
|---|---|---|
| 8.02 | 11.02 | 67 |
| 8.85 | 9.99 | 100 |
| 9.12 | 9.69 | 61 |
| 13.27 | 6.67 | 9 |
| 14.05 | 6.30 | 13 |
| 15.17 | 5.83 | 16 |
| 16.16 | 5.48 | 15 |
| 23.32 | 3.81 | 23 |
| 23.70 | 3.75 | 60 |
| 24.30 | 3.66 | 37 |
| 25.02 | 3.56 | 7 |
| 27.02 | 3.30 | 8 |
| 30.30 | 2.95 | 6 |

| | | |
|---|---|---|
| ^{(a)} ±0.25 | | |

### EXAMPLE 7

0.18 g sodium hydroxide and 0.62 g 1,6-bis(N-methylpyrrolidinium)hexane dibromide were dissolved in 6.73 g deionized water. 0.033 g F-2000 aluminum

hydroxide (Reheis, Inc.) was then dissolved in the resulting solution. 0.90 g CAB-O-SIL M-5 fumed silica (Cabot Corporation) was then added and mixed to create a uniform gel. 0.05 g SSZ-74 seeds from Comparative Example 1 were then added to the gel. The gel was then placed in a Teflon liner, capped, and sealed in an autoclave. The autoclave was then inserted into a rotating spit (43 rpm) in an oven at 160°C for 10 days. The autoclave was then removed and allowed to cool to room temperature. The solids were then recovered by filtration and washing with one liter of deionized water. The recovered solids were then allowed to dry in an oven at 95°C overnight.

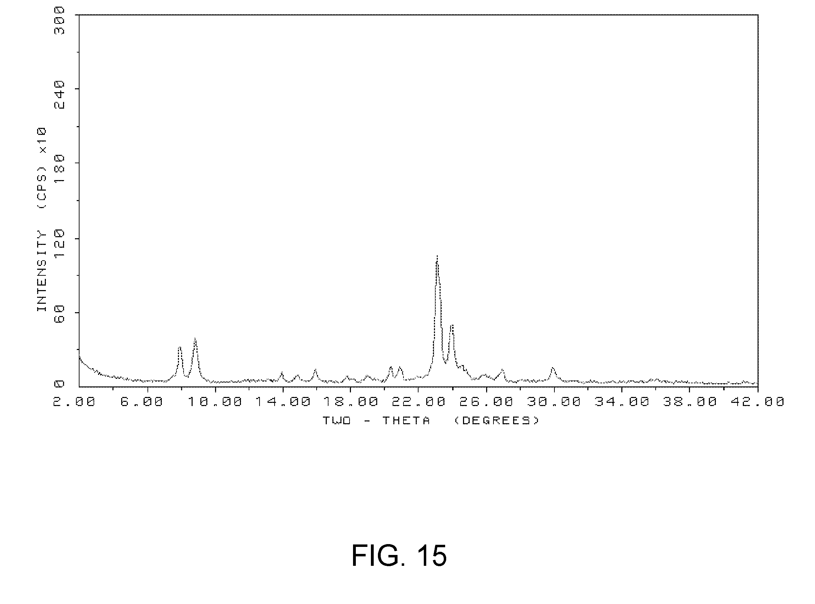

The resulting product was analyzed by powder XRD. The resulting XRD pattern is shown in Figure 15. Powder XRD indicated the sample was SSZ-74.

### EXAMPLE 8

The synthesis procedure from Example 7 was repeated using 4.04 g deionized water. The product was SSZ-74 with a layered phase impurity.

### EXAMPLE 9

The synthesis procedure from Example 7 was repeated using 2.02 g deionzed water. The product was SSZ-74 with a minor zeolite beta impurity and layered phase impurity.

### EXAMPLE 10

0.18 g sodium hydroxide and 0.62 g 1,6-bis(N-methylpyrrolidinium)hexane dibromide were dissolved in 1.35 g deionized water. 0.90 g CAB-O-SIL M-5 fumed silica (Cabot Corporation) was then added and mixed to create a uniform gel. 0.05 g SSZ-74 seeds from Comparative Example 1 were then added to the gel. The gel was then placed in a Teflon liner, capped, and sealed in an autoclave. The autoclave was then inserted into a rotating spit (43 rpm) in an oven at 160°C for 5 days. The autoclave was then removed and allowed to cool to room temperature. The solids were then recovered by a series of centrifugations and washings with deionized water until the conductivity of the aqueous phase was below 200 µmho/cm. The recovered solids were then allowed to dry in an oven at 95°C overnight.

The resulting product was analyzed by powder XRD. Powder XRD indicated the sample was SSZ-74.

### EXAMPLE 11

Into a cup for a 23ml Parr reactor were placed, 3.17 grams (3 mM hydroxide) of the SDA, 0.05 grams of germanium oxide (∼ 0.5 mM GeO₂) and then 1.15 grams of tetraethylorthosilicate (5.5 mM SiO₂). The mole ratios for this reaction mixture were as follows:

| Reactants | Molar Ratios |
|---|---|
| SDA / (SiO₂ + GeO₂) molar ratio | 0.50 |
| OH⁻ / (SiO₂ + GeO₂) molar ratio | 0.50 |
| SiO₂ / GeO₂ | 11 |
| H₂O/SiO₂ molar ratio | 14 |

The silica source was allowed to hydrolyse in a closed system (cap on the cup) for two days at room temperature. Then the cap was removed and the mixture was allowed to evaporate to near dryness (several days). The tared cup and its contents were re-weighed and then water was adjusted to provide 77 mM of water in the reaction. The water-adjusted reaction was then closed and heated at 170°C, with 43 rpm rotation. The reaction was heated for 14 days.

The resulting product was analyzed by powder XRD. Powder XRD indicated the sample was SSZ-74. Table 10 below shows the powder X-ray diffraction lines for the resulting product.

**TABLE 10**

| 2 Theta^{(a)} | d-spacing (Angstroms) | Relative Absolute Intensity (%) |
|---|---|---|
| 7.95 | 11.11 | 11 |
| 8.67 | 10.19 | 25 |
| 8.89 | 9.94 | 22 |
| 8.98 | 9.84 | 20 |
| 12.65 | 6.99 | 3 |
| 13.94 | 6.35 | 5 |
| 14.84 | 5.97 | 2 |
| 15.89 | 5.57 | 8 |
| 16.31 | 5.43 | 3 |
| 18.04 | 4.91 | 7 |
| 18.90 | 4.69 | 8 |
| 19.61 | 4.52 | 3 |
| 20.31 | 4.37 | 11 |
| 20.59 | 4.31 | 6 |
| 21.03 | 4.22 | 9 |
| 21.78 | 4.08 | 3 |
| 22.68 | 3.92 | 13 |
| 23.08 | 3.85 | 100 |
| 23.89 | 3.72 | 55 |
| 24.37 | 3.65 | 2 |
| 24.54 | 3.62 | 11 |
| 24.88 | 3.58 | 11 |
| 26.10 | 3.41 | 5 |
| 26.68 | 3.34 | 5 |
| 26.91 | 3.31 | 8 |
| 28.01 | 3.18 | 4 |
| 29.85 | 2.99 | 10 |

| | | |
|---|---|---|
| ^{(a)} ±0.20 | | |

The resulting product was calcined inside a muffle furnace under a flow of 2%oxygen/98%nitrogen heated to 550°C at a rate of 1°C/min and held at 550°C for five hours and then analyzed by powder XRD. The resulting pattern is shown in Figure 16. Table 11 below shows the powder X-ray diffraction lines for the calcined product.

**TABLE 11**

| 2 Theta^{(a)} | d-spacing (Angstroms) | Relative Absolute Intensity (%) |
|---|---|---|
| 8.07 | 10.94 | 40 |
| 8.88 | 9.95 | 100 |
| 9.06 | 9.75 | 43 |
| 9.22 | 9.59 | 60 |
| 14.13 | 6.26 | 11 |
| 15.20 | 5.83 | 16 |
| 16.13 | 5.49 | 13 |
| 20.90 | 4.25 | 3 |
| 23.60 | 3.77 | 74 |
| 24.34 | 3.65 | 44 |
| 25.18 | 3.53 | 9 |
| 27.23 | 3.27 | 8 |
| 30.39 | 2.94 | 7 |

| | | |
|---|---|---|
| ^{(a)} ±0.25 | | |

### EXAMPLE 12

Example 11 was repeated, except a OH⁻ / SiO₂ + GeO₂ molar ratio of 0.30 was used. The resulting product was analyzed by powder XRD. Powder XRD indicated the sample was SSZ-74.

### EXAMPLE 13

Example 11 was repeated, except a H₂O / SiO₂ molar ratio of 7.0 was used. The resulting product was analyzed by powder XRD. Powder XRD indicated the sample was SSZ-74 with some ITQ-13 impurity.

### EXAMPLE 14

3.44 g of a hydroxide solution of 1,6-bis(N-methylpyrrolidinium)hexane ([OH⁻] = 0.95 mmol/g) were added to 0.40 g Cabosil M-5 fumed silica in a tared Teflon container. The open Teflon container was then placed within a vented hood in order to allow water to evaporate. After 2 days, the H₂O / SiO₂ ratio of the gel was adjusted to 10 with the addition of the necessary quantity of water. The Teflon liner was then capped and sealed within a 23-mL steel Parr autoclave. The autoclave was placed on a spit within a convection oven at 170°C. The autoclave was tumbled at 43 rpm over the course of 7 days in the heated oven. The autoclave was then removed and allowed to cool to room temperature. The solids were then recovered by filtration and washed thoroughly with deionized water (> 250 mL). The solids were allowed to dry overnight at room temperature. The yield of the solids was 0.45 g. Powder XRD (AB1978) showed the product to be pure SSZ-74.

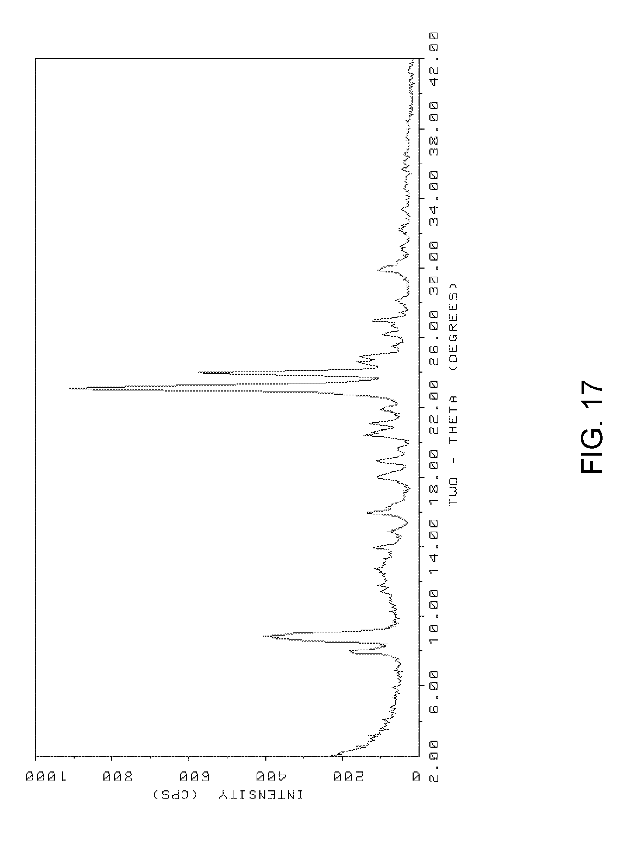

The resulting product was analyzed by powder XRD. The resulting XRD pattern is shown in Figure 17. Powder XRD indicated the sample was SSZ-74.

### EXAMPLE 15

Example 14 was repeated, except an OH⁻ / SiO₂ molar ratio of 0.30 was used, and the reaction mixture was heated at 170°C for 10 days. The resulting product was analyzed by powder XRD. Powder XRD indicated the sample was SSZ-74.

### EXAMPLE 16

Example 14 was repeated, except an OH⁻ / SiO₂ molar ratio of 0.20 was used, and the reaction mixture was heated at 150°C for 8 days. The resulting product was analyzed by powder XRD. Powder XRD indicated the sample was SSZ-74.

### EXAMPLE 17

3.44 g of a hydroxide solution of 1,6-bis(N-methylpyrrolidinium)hexane ([OH⁻] = 0.95 mmol/g) were added to 1.35 g TEOS in a tared Teflon container. The Teflon container was then capped, sealed, and placed within a 23-mL steel Parr autoclave. The autoclave was allowed to remain at room temperature overnight during which time the TEOS was allowed to hydrolyze. The Teflon cup was then removed from the autoclave and opened. The open Teflon container was then placed within a vented hood in order to allow the water and ethanol to evaporate. After 3 days, the H₂O / SiO₂ ratio of the gel was adjusted to 10 with the addition of the necessary quantity of water. The Teflon liner was then capped and sealed within a 23-mL steel Parr autoclave. The autoclave was placed on a spit within a convection oven at 170°C. The autoclave was tumbled at 43 rpm over the course of 14 days in the heated oven. The autoclave was then removed and allowed to cool to room temperature. The solids were then recovered by filtration and washed thoroughly with deionized water (> 250 mL). The solids were allowed to dry overnight at room temperature.

The resulting product was analyzed by powder XRD. Powder XRD indicated the sample was SSZ-74.

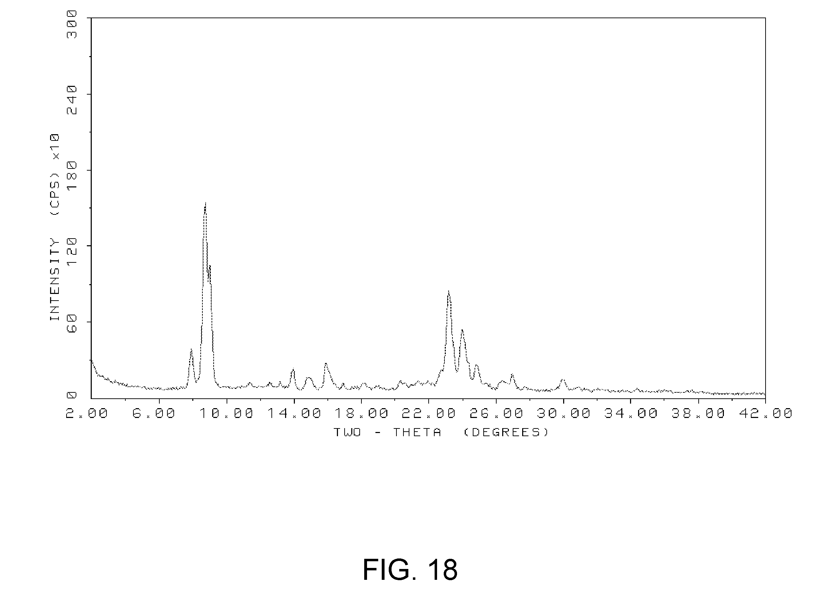

The resulting product was then calcined inside a muffle furnace under a flow of 2%oxygen/98%nitrogen heated to 550°C at a rate of 1°C/min and held at 550°C for five hours and then analyzed by powder XRD. The resulting XRD pattern is shown in Figure 18.

## Claims

1. A method of preparing molecular sieve SSZ-74 comprising contacting under crystallization conditions and substantially in the absence of fluoride ions: (1) at least one source of at least one oxide of a tetravalent element; (2) optionally, one or more sources of one or more oxides selected from the group consisting of oxides of trivalent elements, pentavalent elements, and mixtures thereof; (3) hydroxide ions; and (4) a 1,6-bis(N-methylpyrrolidinium)hexane dication.

2. The method of Claim 1, wherein the molecular sieve is prepared from a reaction mixture comprising, in terms of mole ratios, the following:
| | |
|---|---|
| TO₂ / X₂Oₐ | 40 - ∞ |
| M / TO₂ | 0 - 0.5 |
| Q / TO₂ | 0.02 - 0.5 |
| OH⁻ / TO₂ | 0.10 - 0.50 |
| H₂O / TO₂ | 1 - 40 |
wherein:
(1) T is selected from the group consisting of tetravalent elements from Groups 4-14 of the Periodic Table, and mixtures thereof;
(2) X is selected from the group consisting of trivalent and pentavalent elements from Groups 3 -13 of the Periodic Table, and mixtures thereof;
(3) a equals the valence state of X;
(4) M is selected from the group consisting of elements from Groups 1 and 2 of the Periodic Table; and
(5) Q is an SDA selected from the group consisting of 1,6-bis(N-methylpyrrolidinium)hexane dications.

3. The method of Claim 2, wherein T is selected from the group consisting of Ge, Si, and mixtures thereof.

4. The method of Claim 3, wherein T is Si.

5. The method of Claim 3, wherein X is selected from the group consisting of Ga, Al, Fe, B, In, and mixtures thereof.

6. The method of Claim 5, wherein X is selected from the group consisting of Al, B, Fe, Ga, and mixtures thereof.

7. The method of Claim 2, wherein X is selected from the group consisting of Ga, Al, Fe, B, In, and mixtures thereof.

8. The method of Claim 7, wherein X is selected from the group consisting of Al, B, Fe, Ga, and mixtures thereof.

9. The method of Claim 1, wherein T is Si and X is B.

10. The method of Claim 1, wherein the molecular sieve is prepared from a reaction mixture comprising, in terms of mole ratios, the following:
| | |
|---|---|
| SiO₂ / GeO₂ | 8 - ∞ |
| Q / (SiO₂ + GeO₂) | 0.05 - 0.5 |
| OH⁻ / (SiO₂ + GeO₂) | 0.1 - 1.0 |
| H₂O / (SiO₂ + GeO₂) | 1 - 30 |
wherein Q is an SDA selected from the group consisting of 1,6-bis(N-methylpyrrolidinium)hexane dications.

11. The method of Claim 1, wherein the molecular sieve is prepared from a reaction mixture comprising, in terms of mole ratios, the following:
| | |
|---|---|
| Q / SiO₂ | 0.05 - 0.5 |
| OH⁻ / SiO₂ | 0.1 - 1.0 |
| H₂O / SiO₂ | 1 - 30 |

12. The method of Claim 1, wherein the molecular sieve has, after calcination, an X-ray diffraction pattern substantially as shown in the following Table:
| 2 Theta | d-spacing (Angstroms) | Relative Absolute Intensity (%) |
|---|---|---|
| 8.02 ± 0.25 | 11.02 | VS |
| 8.85 ± 0.25 | 9.99 | VS |
| 9.12 ± 0.25 | 9.69 | VS |
| 14.05 ± 0.25 | 6.30 | W |
| 15.17 ± 0.25 | 5.83 | W |
| 16.16 ± 0.25 | 5.48 | W |
| 23.32 ± 0.25 | 3.81 | M |
| 23.70 ± 0.25 | 3.75 | S |
| 24.30 ± 0.25 | 3.66 | M |

13. The method of Claim 1, wherein the molecular sieve is prepared from a reaction mixture comprising, in terms of mole ratios, the following:
| | |
|---|---|
| TO₂ / X₂Oₐ | 40 - ∞ |
| M/TO₂ | 0 - 0.5 |
| Q / TO₂ | 0.02 - 0.5 |
| OH⁻ / TO₂ | 0.10 - 0.50 |
| H₂O / TO₂ | 1 - 40 |
| F / TO₂ | 0 - 0.15 |
wherein:
(1) T is selected from the group consisting of tetravalent elements from Groups 4-14 of the Periodic Table, and mixtures thereof;
(2) X is selected from the group consisting of trivalent and pentavalent elements from Groups 3 -13 of the Periodic Table, and mixtures thereof;
(3) a equals the valence state of X;
(4) M is selected from the group consisting of elements from Groups 1 and 2 of the Periodic Table; and
(5) Q is an SDA selected from the group consisting of 1,6-bis(N-methylpyrrolidinium)hexane dications.
